## Europäisches Patentamt

## European Patent Office

## Office européen des brevets

(11) Publication number: **0 147 490**
**B1**

# EUROPEAN PATENT SPECIFICATION

(45) Date of publication of patent specification: **22.02.89**

(51) Int. Cl.⁴: **H 02 M 7/04**

(21) Application number: **83307698.7**

(22) Date of filing: **19.12.83**

(54) Power supply input system.

(43) Date of publication of application:
**10.07.85 Bulletin 85/28**

(45) Publication of the grant of the patent:
**22.02.89 Bulletin 89/08**

(84) Designated Contracting States:
**DE FR GB IT NL SE**

(56) References cited:
**EP-A-0 021 714**

**Patent Abstracts of Japan vol. 3, no. 141, 21
November 1979 page 78E153 & JP-A-54-119626
Patent Abstracts of Japan vol. 4, no. 130, 12
September 1980 page 142E25 & JP-A-55-83458
Patent Abstracts of Japan vol. 4, no. 91, 28
June 1980 page 43E17 & JP-A-55-56481**

(73) Proprietor: **International Business Machines
Corporation
Old Orchard Road
Armonk, N.Y. 10504 (US)**

(72) Inventor: **Sawdon, David
3 Sycamore Drive
Kingsworthy Winchester Hants SO23 7NW (GB)**

(74) Representative: **Appleton, John Edward
IBM United Kingdom Limited Intellectual
Property Department Hursley Park
Winchester Hampshire SO21 2JN (GB)**

Courier Press, Leamington Spa, England.

## Description

This invention relates to a system for controlling the input voltage to a switch mode power supply. A system with the features of the precharacterizing part of claim 1 is known from EP—A1—21714.

Conventionally switched mode power supplies are built with an input stage which can either be configured as a full wave bridge circuit or as a voltage doubler by the omission or installation of a link. This entails either manufacturing two power supply parts or one part with a voltage selection panel or switch with the attendant problems of cost and wrong selection.

Prior art switched mode power supplies approach the problem of inrush current limiting in one of four ways. The best of these can perhaps reduce the peak inrush current of a 110 volt power supply to around 40 amps peak. Naturally this high peak current leads to expensive (or short lived) mains switches and to large stresses within the power supply input circuitry. The four techniques may be summarised as:

1. No specific limiting components, this relies on the ESR of the input capacitors and the forward impedance of the diodes to limit the charging current—this is generally not considered acceptable in professional equipment.

2. A fixed resistor in series with the input, this provides a degree of limiting but is wasteful of power when the supply is operating normally and is unreliable because of its high running temperature.

3. A resistor with a negative temperature coefficient in series with the input, this can be designed to give better limiting when switching on from cold than the earlier techniques but is totally ineffective when switching off and then on again so that the capacitors have discharged but the thermistor has not cooled down.

4. A fixed resistor in series with the input which is short circuited by a TRIAC once the supply is operating normally, this is the best of the available techniques but requires a feedback winding on the switching transformer and does not eliminate inrush current it simply limits it to around 40 amps (eg).

The use of phase control techniques is well known. UK Patents Application 2 058 405 A (Contrology Techniques Limited) describes motor drive circuitry which controls speed and torque using phase control. A motor drive comprises an electronic switch connected in series with a universal motor across an a.c. supply (LM), and the switch is activated in timed relationship with the supply frequency by a feedback control system incorporating logic for predetermining the speed/torque characteristic of the drive by delivering an error signal to adjust the timed relationship at which the electronic switch is activated according to the relative magnitudes of motor voltage $V_s$ and current $I_s$. The logic may be hard wired or within a preprogrammed microprocessor.

According to the present invention there is provided a power supply input system for connection of a switch mode power supply to AC mains and in which a bidirectional triode thyristor (TRIAC) is connected in series with a voltage doubler circuit, the system comprising a control circuit including a comparator circuit which receives inputs from the voltage doubler circuit and a timing ramp generator, and a zero crossing detector which monitors the mains input and provides an input to the timing ramp generator characterized in that the system further comprises under-voltage and over-current monitoring circuits which provide an input to a reset circuit which provides an input to the timing ramp generator to select the slope of the waveform generated, so that at the time of application of power the conduction angle is zero and slowly increases to that demanded by the control circuit.

The advantages of the invention over the prior art are switch on inrush current is eliminated rather than simply limited as in conventional designs, this leads to greater reliability and cheaper mains switches, the tolerance of a power supply to mains disturbances and fluctuations is increased because of the extra stage of regulation; the value of protection fuse need not be changed to suit the input voltage as electronic overcurrent protection is inherent in the circuit.

In order that the invention may be fully understood a preferred embodiment thereof will now be described with reference to the accompanying drawings in which:

Fig. 1 illustrates a prior art circuit.

Fig. 2 illustrates the preferred embodiment of the invention.

Fig. 3 is a block schematic of the control circuit of Fig. 2.

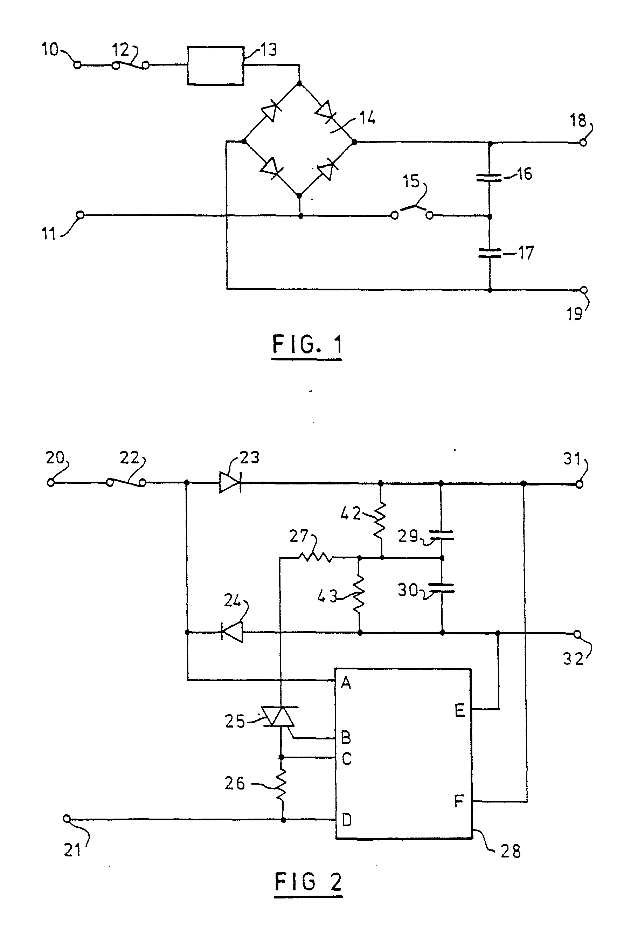

Referring now to Fig. 1 which shows a prior art voltage doubler circuit which is configured for 110 v or 240 v by the omission or installation of a link. The AC mains input is applied across terminals 10 and 11, a fuse 12 and a surge current limiting device 13, which may be a resistor, thermistor, or resistor plus triac, are connected in series from terminal 10 to one arm of a bridge circuit 14. Terminal 11 is connected to the opposite arm of the bridge and through a configuring link 15 to the centre of two power supply capacitors 16 and 17. The DC output which may be fed to a switching stage is taken from terminals 18 and 19.

Fig. 2 shows a preferred embodiment of the invention which maintains a constant DC voltage across the power input capacitors regardless of the mains voltage between limits of 80 v to 300 v (say). This is achieved by placing a TRIAC 25 in series with the mains input 20, 21 to the power supply. The conduction angle of the TRIAC is varied cycle by cycle to maintain a constant DC voltage across the input capacitors 29, 30 which is conjunction with diodes 23, 24 form a voltage doubler circuit.

The conduction angle of the TRIAC is controlled by firing pulses provided by a control circuit 28. The control circuit compares the DC voltage across the power supply input capacitors 29, 30 to a reference voltage and produces an error term which determines the phase delay between a mains input zero crossing and the production of a firing pulse.

Resistors 42 and 43 ensure equal voltages are present across capacitors 29 and 30 and provide a discharge path when the mains input is removed from the power supply.

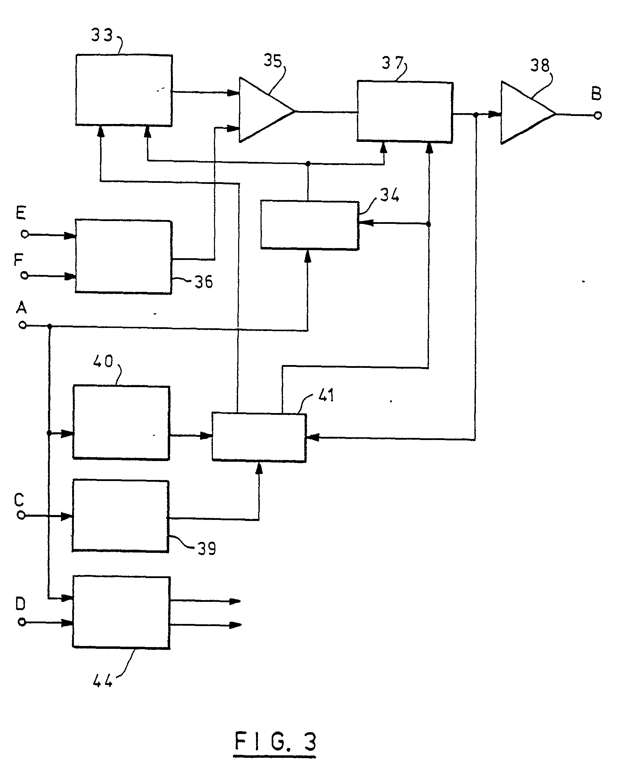

The control circuit 28 (which is shown in more detail in Fig. 3) ensures that at power on time the conduction angle of the TRIAC is zero and that this then slowly increases to provide the correct DC voltage across capacitors 29, 30 and the DC output terminals 31, 32 which are connected to a switching stage. By using this technique the problem of excessive inrush current normally associated with switched mode power supplies is eliminated.

Resistor 26 senses the current flowing through the TRIAC and provides an input to the control circuit 28 to enable the monitoring of the current being taken by the power supply (during both power up and normal operation) and vary the conduction angle if a fault condition is detected.

Resistor 27 provides a "softening" of the cycle by cycle current and a degree of limiting under major fault conditions. The fuse 22 provides protection against fire hazards during major fault conditions.

Fig. 3 shows the control circuit 28 in more detail. A timing ramp generator 33 generates a ramp waveform which is synchronised to mains voltage zero crossings by a zero crossing detector 34. This ramp waveform forms the reference input to a comparator 35.

The DC bus voltage of the power supply is applied to a differential-to-single-ended converter 36 the output of which is the second comparator input. When the comparator output is high a pulse timing circuit 37 is enabled and produces firing pulses which are applied to the gate of the TRIAC through an amplifier 38. The gain and sense of the circuitry is such as to provide a stable self-regulating feedback system.

On the initial power application to the circuit the ramp generator 33 produces ramps with a very low slope angle allowing only very small conduction angles and hence no inrush of current. Once the correct DC bus voltage has been reached the ramp generator is switched to produce steep angled ramp waveforms to allow a full range of conduction angle control.

If an under-voltage or over-current situation is detected by an over-current monitor 39 or a voltage monitor 40 then the reset circuitry 41 resets the ramp generator 33, the zero crossing detector 34 and the pulse timing circuit 37 to initial power on conditions and the circuitry then soft starts as at initial power on time.

A voltage regulator circuit 44 provides a regulated DC voltage for use by the control circuitry shown in Fig. 3. Input D is the ground reference.

## Claims

1. A power supply input system for connection of a switch mode power supply to AC mains and in which a bidirectional triode thryistor (TRIAC) (25) is connected in series with a voltage doubler circuit (23, 24, 29, 30), the system comprising a control circuit (28) including a comparator circuit (35), which receives inputs from the voltage doubler circuit and a timing ramp generator (33) and a zero crossing detector (34), which monitors the mains input and provides an input to the timing ramp generator (33), characterized in that the system further comprises under-voltage and over-current monitoring circuits (40, 39) which provide an input to a reset circuit (41) which provides an input to the timing ramp generator to select the slope of the waveform generated, so that at the time of application of power the conduction angle is zero and slowly increases to that demanded by the control circuit.

2. A power supply input system as claimed in claim 1 having an output of relatively constant voltage regardless of the mains input voltage between limits of 80V to 300V.

## Patentansprüche

1. Netzteil-Eingangssystem zur Verbindung eines Schaltnetzteils mit mit dem Wechselspannungsnetz, wobei ein bidirektionaler Trioden-Thyristor (TRIAC) (25) mit einem Spannungsverdoppler-Schaltkreis (23, 24, 29, 30) in Serie geschaltet ist, wobei das System eine Steuerschaltung (28) mit einer Vergleicherschaltung (35), die Eingangssignale vom Spannungsverdoppler-Schaltkreis erhält, einen Zeitrampengenerator (33) und einen Null-Durchgangs-Detektor (34) aufweist, der den Netzspannungs-Eingang überwacht und ein Eingangssignal für den Zeitrampengenerator (33) erzeugt, dadurch gekennzeichnet, daß das System Unterspannungsund Überstrom-Überwachungsschaltungen (40, 39) enthält, welche ein Eingangssignal für eine Rücksetzschaltung (41) erzeugen, die ihrerseits ein Eingangssignal für den Zeitrampengenerator erzeugt und so den Anstieg der erzeugten Wellenform festlegt, daß zu dem Zeitpunkt, zu dem Leistung angelegt wird, der Durchlaßwinkel Null beträgt und langsam zu dem von der Steuerschaltung geforderten ansteigt.

2. Netzteil-Eingangssystem nach Anspruch 1, dadurch gekennzeichnet, daß die Ausgangsspannung relativ konstant ist, ungeachtet der Netz-Eingangsspannung zwischen 80 und 300 Volt.

## Revendications

1. Système d'entrée d'alimentation pour la connexion d'une alimentation à mode commuté à un secteur alternatif et dans lequel un thyristor bidirectionnel (TRIAC) (25) est connecté en série avec un circuit doubleur de tension (23, 24, 29, 30), le système comportant un circuit de commande (28) comprenant un circuit comparateur (35) qui reçoit des entrées venant du circuit doubleur de tension et un générateur (33) de rampes de minutage, et un détecteur de passage au zéro (34), qui contrôle l'entrée secteur et qui délivre une entrée au générateur (33) de rampes de minutage, caractérisé en ce que le système comporte de plus des circuits de contrôle de sous-tension et de surintensité (40, 39) qui délivrent une entrée à un circuit de remise à zéro (41) qui fournit une entrée au générateur de rampes de minutage de façon à sélectionner la pente de la forme d'onde générée, de telle sorte qu'au moment de l'application des tensions, l'angle de conduction soit de zéro et s'accroisse lentement jusqu'à celui qui est demandé par le circuit de commande.

2. Système d'entrée pour une alimentation selon la revendication 1, ayant une sortie de tension relativement constante quelle que soit la tension d'entrée du secteur, à l'intérieur des limites de 80 V à 300 V.

FIG. 1

FIG 2

1

FIG. 3